(19) Europäisches Patentamt
European Patent Office
Office européen des brevets

(11) **EP 4 718 300 A1**

(12) **EUROPEAN PATENT APPLICATION**

(43) Date of publication:
**01.04.2026 Bulletin 2026/14**

(21) Application number: **24212994.8**

(22) Date of filing: **14.11.2024**

(51) International Patent Classification (IPC):
**G06F 21/55** (2013.01) **G06F 21/56** (2013.01)
**G06F 12/02** (2006.01) **G06F 16/21** (2019.01)
**G06F 18/243** (2023.01) **H04L 9/40** (2022.01)
**G06F 16/901** (2019.01)

(52) Cooperative Patent Classification (CPC):
**G06F 21/566; G06F 12/0246; G06F 18/24323;
G06F 21/554; H04L 63/1416**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.09.2024 US 202418896031**

(71) Applicant: **Samsung Electronics Co., Ltd.
Suwon-si, Gyeonggi-do 16677 (KR)**

(72) Inventors:
• **SHAPIRO, Dikla
Suwon-si, Gyeonggi-do 16677 (KR)**
• **BERMAN, Amit
Suwon-si, Gyeonggi-do 16677 (KR)**

• **HALPERIN, Elisha
Suwon-si, Gyeonggi-do 16677 (KR)**
• **BINYAMINI, Lior
Suwon-si, Gyeonggi-do 16677 (KR)**
• **BLAICHMAN, Evgeny
Suwon-si, Gyeonggi-do 16677 (KR)**
• **LIVNE, Noam
Suwon-si, Gyeonggi-do 16677 (KR)**

(74) Representative: **Kuhnen & Wacker
Patent- und Rechtsanwaltsbüro PartG mbB
Prinz-Ludwig-Straße 40A
85354 Freising (DE)**

Remarks:
Amended claims in accordance with Rule 137(2)
EPC.

(54) **METHOD AND APPARATUS FOR RANSOMWARE DETECTION**

(57) A nonvolatile memory device includes a memory storing a read segments database and processing circuitry configured to parse read and write commands received from a host, detect write after read operations based on the read and write commands and the read segments database, determine features of the write after read operations, determine a probability of a ransomware attach based on the features, and output a warning in response to determining a likely ransomware attack.

FIG. 1

EP 4 718 300 A1

**Description**

BACKGROUND

Ransomware is a type of malware that encodes data targeted for attack and demands money in exchange for an encryption key necessary for decrypting the encrypted data. Ransomware has become a risk factor that causes enormous financial and social losses. Accordingly, there are required measures that allow a storage device to cope with the ransomware attack.

SUMMARY

Some example embodiments of the inventive concepts described herein relate to a method and an apparatus for early detection of a ransomware attack.

According to some example embodiments, a nonvolatile memory device includes a memory storing a read segments database and processing circuitry configured to parse read and write commands received from a host, detect write after read operations based on the read and write commands and the read segments database, determine features of the write after read operations, determine a probability of a ransomware attach based on the features, and output a warning in response to determining a likely ransomware attack.

According to some example embodiments, a method for determining a ransomware attack includes parsing read and write commands received from a host, detecting write after read operations based on the read and write commands and a read segments database, determining features of the write after read operations, determining a probability of a ransomware attack based on the features, and outputting a warning in response to determining a likely ransomware attack.

According to some example embodiments, a system includes a host and a nonvolatile memory device including a memory storing a read segments database and processing circuitry configured to parse read and write commands received from the host, detect write after read operations based on the read and write commands and the read segments database, determine features of the write after read operations, determine a probability of a ransomware attack based on the features, and output a warning in response to determining a likely ransomware attack.

BRIEF DESCRIPTION OF THE FIGURES

The above and other objects and features of the inventive concepts will become apparent by describing in detail some example embodiments thereof with reference to the accompanying drawings.

FIG. 1 is a diagram of a system to which a storage device is applied, according to example embodiments.

FIG. 2 is an example of a block diagram of ransomware detector according to example embodiments.

FIG. 3 is an example of received command attributes according to example embodiments.

FIG. 4 is a functional diagram of a pre-processor according to example embodiments.

FIG. 5 is an example of a WaR detection according to example embodiments.

FIG. 6 is a representation of a random forest according to example embodiments.

FIG. 7 is an example structure of a node according to example embodiments.

FIG. 8 is an example of a read segments database according to example embodiments.

FIG. 9 is an example of an address of a read/write access according to example embodiments.

FIG. 10 is an example of a hash table according to example embodiments.

FIG. 11 is an example of a chunk header according to example embodiments.

FIG. 12 is an example of a static segment descriptor according to example embodiments.

FIG. 13 is an example of a dynamic allocation of list extensions according to example embodiments.

DETAILED DESCRIPTION

Below, some example embodiments of the inventive concepts will be described in detail and clearly to such an extent that one skilled in the art easily carries out the inventive concepts. In the following description, specific details such as detailed components and structures are merely provided to assist the overall understanding of some example embodiments of the inventive concepts. Therefore, it should be apparent to those skilled in the art that various changes and modifications of the example embodiments described herein may be made without departing from the scope and spirit of the inventive concepts. In addition, the descriptions of well-known functions and structures are omitted for clarity and brevity. In the following drawings or in the detailed description, components may be connected with any other components except for components illustrated in a drawing or described in the detailed description. The terms described in the specification are terms defined in consideration of the functions in the inventive concepts and are not limited to a specific function. The definitions of the terms should be determined based on the contents throughout the specification.

In the detailed description, components that are described with reference to the terms "driver", "block", "unit", etc. will be implemented with software, hardware, or a combination thereof. For example, the software may be a machine code, firmware, an embedded code, and application software. For example, the hardware may include an electrical circuit, an electronic circuit, a processor, a computer, integrated circuit cores, a pressure sensor, an inertial sensor, a micro electro mechanical system (MEMS), a passive element, or a combination thereof.

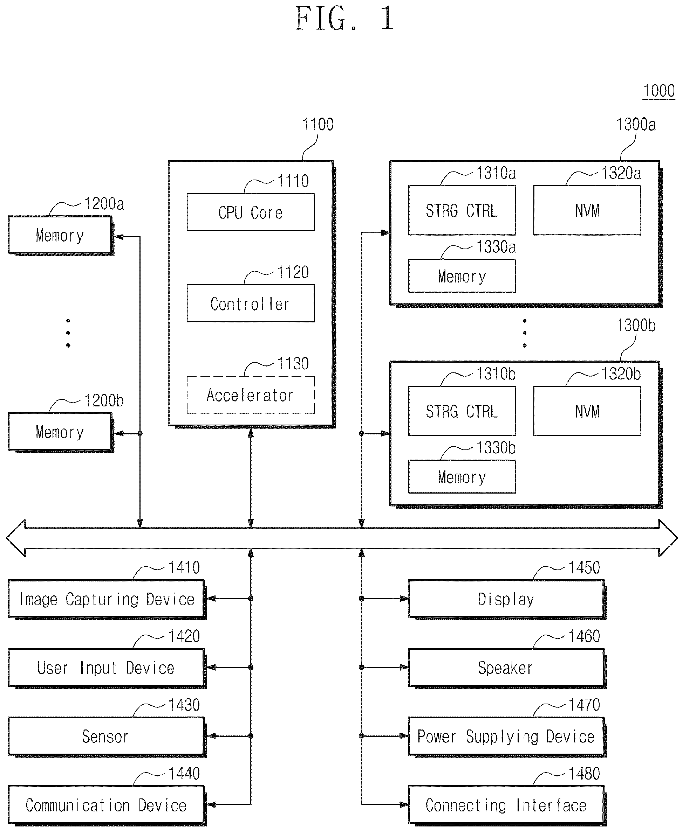

FIG. 1 is a diagram of a system 1000 to which a storage device is applied, according to an embodiment. The system 1000 of FIG. 1 may basically be a mobile system, such as a portable communication terminal (e.g., a mobile phone), a smartphone, a tablet personal computer (PC), a wearable device, a healthcare device, or an Internet of things (IOT) device. However, the system 1000 of FIG. 1 is not necessarily limited to the mobile system and may be a PC, a laptop computer, a server, a media player, or an automotive device (e.g., a navigation device).

Referring to FIG. 1, the system 1000 may include a main processor 1100, memories (e.g., 1200a and 1200b), and storage devices (e.g., 1300a and 1300b). In addition, the system 1000 may include at least one of an image capturing device 1410, a user input device 1420, a sensor 1430, a communication device 1440, a display 1450, a speaker 1460, a power supplying device 1470, and a connecting interface 1480.

The main processor 1100 may control all operations of the system 1000, more specifically, operations of other components included in the system 1000. The main processor 1100 may be implemented as a general-purpose processor, a dedicated processor, or an application processor.

The main processor 1100 may include at least one CPU core 1110 and further include a controller 1120 configured to control the memories 1200a and 1200b and/or the storage devices 1300a and 1300b. In some embodiments, the main processor 1100 may further include an accelerator 1130, which is a dedicated circuit for a high-speed data operation, such as an artificial intelligence (AI) data operation. The accelerator 1130 may include a graphics processing unit (GPU), a neural processing unit (NPU) and/or a data processing unit (DPU) and be implemented as a chip that is physically separate from the other components of the main processor 1100.

The memories 1200a and 1200b may be used as main memory devices of the system 1000. Although each of the memories 1200a and 1200b may include a volatile memory, such as static random access memory (SRAM) and/or dynamic RAM (DRAM), each of the memories 1200a and 1200b may include non-volatile memory, such as a flash memory, phase-change RAM (PRAM) and/or resistive RAM (RRAM). The memories 1200a and 1200b may be implemented in the same package as the main processor 1100.

The storage devices 1300a and 1300b may serve as non-volatile storage devices configured to store data regardless of whether power is supplied thereto, and have larger storage capacity than the memories 1200a and 1200b. The storage devices 1300a and 1300b may respectively include storage controllers (STRG CTRL) 1310a and 1310b and NVM (Non-Volatile Memory) s 1320a and 1320b configured to store data via the control of the storage controllers 1310a and 1310b. Although the NVMs 1320a and 1320b may include flash memories having a two-dimensional (2D) structure or a three-dimensional (3D) V-NAND structure, the NVMs 1320a and 1320b may include other types of NVMs, such as PRAM and/or RRAM.

The storage devices 1300a and 1300b may be physically separated from the main processor 1100 and included in the system 1000 or implemented in the same package as the main processor 1100. In addition, the storage devices 1300a and 1300b may have a nonvolatile memory NVM 1320a and 1320b. The NVM 1320a and/or 1320b may include types of solid-state devices (SSDs) or memory cards and be removably combined with other components of the system 100 through an interface, such as the connecting interface 1480 that will be described below. The storage devices 1300a and 1300b may additionally include a volatile memory 1330a and/or 1330b. The memory 1330a and/or 1330b may include non-volatile memory, such as a flash memory, phase-change RAM (PRAM) and/or resistive RAM (RRAM). The storage devices 1300a and 1300b may be devices to which a standard protocol, such as a universal flash storage (UFS), an embedded multi-media card (eMMC), or a non-volatile memory express (NVMe), is applied, without being limited thereto.

The image capturing device 1410 may capture still images or moving images. The image capturing device 1410 may include a camera, a camcorder, and/or a webcam.

The user input device 1420 may receive various types of data input by a user of the system 1000 and include a touch pad, a keypad, a keyboard, a mouse, and/or a microphone.

The sensor 1430 may detect various types of physical quantities, which may be obtained from the outside of the system 1000, and convert the detected physical quantities into electric signals. The sensor 1430 may include a temperature sensor, a pressure sensor, an illuminance sensor, a position sensor, an acceleration sensor, a biosensor, and/or a gyroscope sensor.

The communication device 1440 may transmit and receive signals between other devices outside the system 1000 according to various communication protocols. The communication device 1440 may include an antenna, a transceiver, and/or a modem.

The display 1450 and the speaker 1460 may serve as output devices configured to respectively output visual information and auditory information to the user of the system 1000.

The power supplying device 1470 may appropriately convert power supplied from a battery (not shown) embedded in the system 1000 and/or an external power source, and supply the converted power to each of components of the system 1000.

The connecting interface 1480 may provide connection between the system 1000 and an external device, which is connected to the system 1000 and capable of transmitting and receiving data to and from the system 1000. The connecting interface 1480 may be implemented by using various interface schemes, such as advanced technology attachment (ATA), serial ATA (SATA), external SATA (e-SATA), small computer small interface (SCSI), serial attached SCSI (SAS), peripheral component interconnection (PCI), PCI express (PCIe), NVMe, IEEE 1394, a universal serial bus (USB) interface, a secure digital (SD) card interface, a multi-media card (MMC) interface, an eMMC interface, a UFS interface, an embedded UFS (eUFS) interface, and a compact flash (CF) card interface.

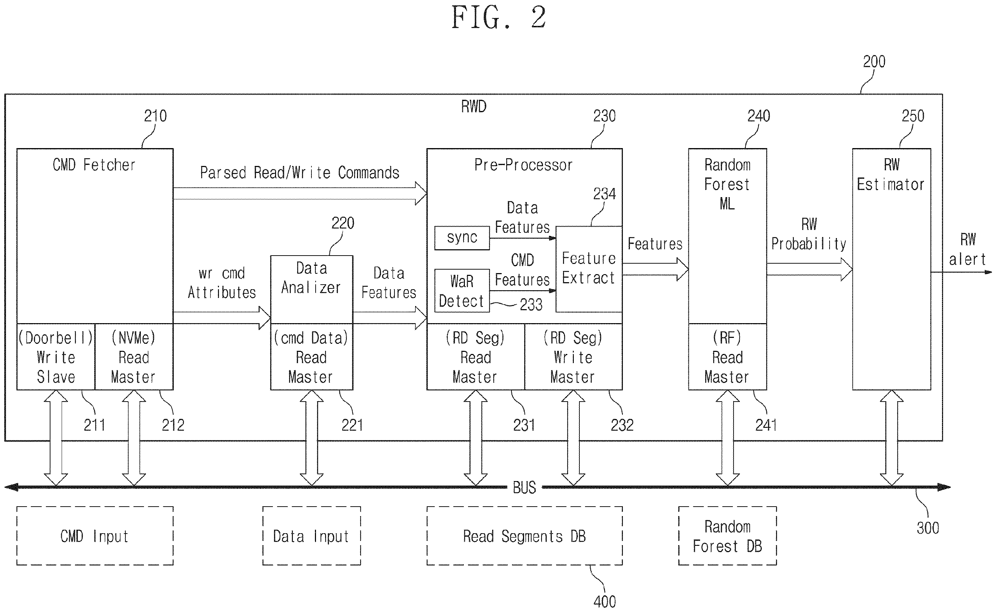

FIG. 2 is an example of a block diagram of ransomware detector according to example embodiments.

Referring to FIG. 2, a ransomware detector (RWD) 200 includes a command (CMD) fetcher 210, a data analyzer 220, a pre-processor 230, a machine learning (ML) unit 240, and/or a ransomware (RW) estimator 250. The RWD 200 may be implemented by a processor of system 1000. For example, the RWD 200 may be implemented by storage controller 1310a or storage controller 1310b or main processor 1100. However, example embodiments are not limited thereto and the RWD may be a separate circuit from the storage controllers 1310a/1310b or the main processor 1100.

For example, the ransomware detector RWD may be an integrated peripheral (IP) separate from the above discussed processors. For example, the RWD 200 may be implemented as an IP on a FPGA card and/or implemented by ASIC. For clarity of explanation, the RWD 200 is discussed herein as an IP on a FPGA card.

The RWD 200 may communicate over a bus 300. For example, in the case where the RWD is an IP on a FPGA card, the bus 300 may be an advanced extensible interface (AXI) bus and the RWD 200 may include 6 AXI or AXI-lite interfaces.

The CMD fetcher 210 includes a doorbell write slave 211 and/or a non-volatile memory express (NVMe) read master 212. The doorbell write slave 211 may be an interface (e.g., an AXI interface) configured to receive a doorbell notification of new NVMe parsed commands available in a memory (e.g., volatile memory 1330a and/or 1330b and/or DRAM and/or SRAM). The doorbell notification may be, for example, a number denoting a number of commands newly added to the memory. The NVMe read master 212 may be an interface (e.g., an AXI interface) configured to read commands. For example, the NVMe read master 212 may read 2 consecutive addresses (2X64 bits) of command fields.

The data analyzer 220 includes a data read master 221. The read master 221 may be an interface (e.g., an AXI interface) configured to read up to 3 data blocks per write command. Each data block may be 512 bytes located in 64 consecutive addresses of 64 bits (e.g., a burst read).

The pre-processor 230 includes a read master 231 and/or a write master 232. The read master 231 may be an interface (e.g., an AXI interface) configured to access read segments of a database (DB) in the memory. The read master 231 may support burst reads of 4 consecutive addresses. The write master 232 may be an interface (e.g., an AXI interface) configured to add and/or change read segments of the DB in the memory. The write master 232 may support burst writes of 4 consecutive addresses.

The ML unit 240 includes a ML model (e.g., a random forest (RF) model). The ML model includes a read master 241 (e.g., a RF read master). The read master 241 may be an interface (e.g., an AXI interface) configured to read tree nodes from the memory.

The CMD fetcher 210 reads parsed commands (e.g., NVMe commands) from the host 1100 to the storage device 1300a, 1300b, and transfers the commands to the pre-processor 230 and/or the data analyzer 220. For example, the NVMe read master 212 may receive a doorbell notification indicating a number of newly added commands added to the memory. Access to a command space in the memory is cyclic (e.g., FIFO). The CMD fetcher 210 may issue a read request (e.g., via the read master 212) to the memory to fetch the command attributes of the newly added commands. The read request may be, for example, 2 beats.

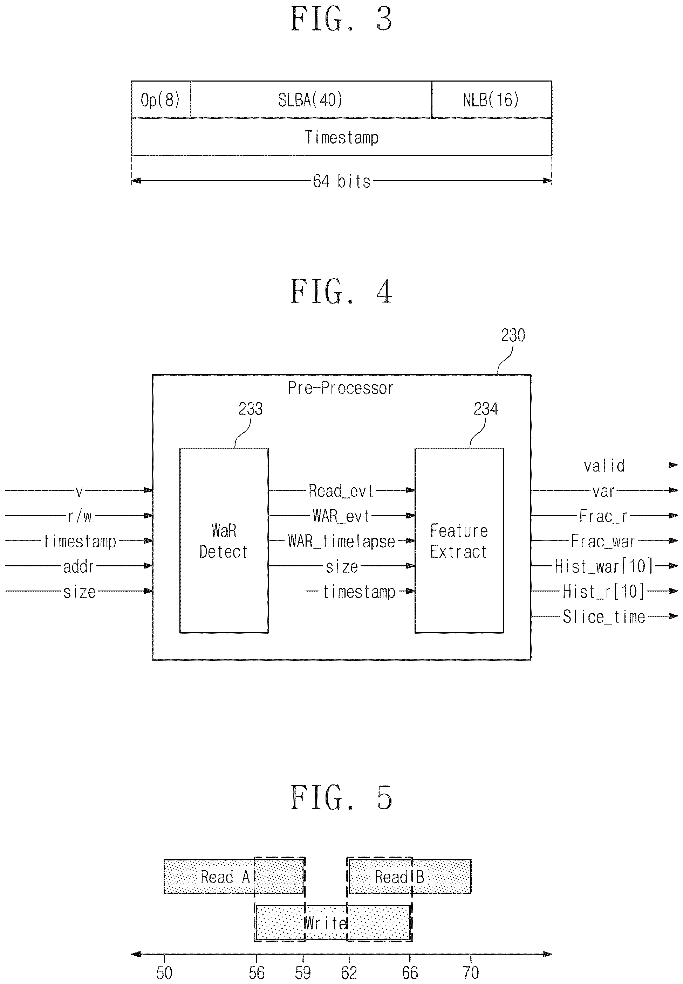

FIG. 3 is an example of received command attributes according to example embodiments.

Referring to FIG. 3, the command attributes may include an 8 bit opcode, a 40 bit start address, 16 bit access size, and a 64 bit timestamp. The CMD fetcher 210 verifies that the access is of type "read" (e.g., opcode=0x02) or "write" (e.g., opcode=0x01) and passes the command attributes to the pre-processor. If the command is not a read or a write, the CMD fetcher 210 will pass the command to the pre-processor 230. If the command is a write, the CMD fetcher 210 will also notify the data analyzer 220 with the number of logic blocks (NLB) of the command.

The data analyzer 220 receives a notification with the command size (e.g., the NLB of the command) from the CMD fetcher 210. The data analyzer fetches up to three logical blocks from a data buffer in the memory and calculates the data entropy per block. Each logical block may be, for example, a 512 bytes block, and may be read and received in a burst of 64 cycles (e.g., 8 bytes per cycle for 64 cycles).

For a write command of 1 logic block, the data analyzer 220 expects to receive one data block from the memory. For a write command of 2 logic blocks, the data analyzer 220 expects to receive 2 data blocks from the memory. For a write command of 3 data blocks, the data analyzer 220 expects to receive 3 data blocks from the memory. For a write command of more than 3 data blocks, the data analyzer 220 expects to receive 3 data blocks from the memory (e.g., a sub-sample of the data such as a first block, a last block, and a random block from between the first and last block).

While the data is received, the data analyzer 210 builds and maintains a histogram with the count of appearance of all byte types (e.g., 256 bins). For example, the data analyzer 210 may include 256 counters of 10 bits, as each byte may appear 0-512 times in a block. When the histogram is ready, (e.g., at least 1 cycle after the last data of the block), the data analyzer 210 calculates the data entropy according to Equation 1.

Equation 1

$$\sum \frac{h[i] * (\log(block\_size) - \log(h[i]))}{block\_size * norm\_factor}$$

block size may be a constant parameter. For example, block size may be equal to 512 and log(block_size) may be equal to 9. For example, for each histogram column that is not equal to 0, the data analyzer 210 determines a contribution of the histogram column according to ( h[i]*(log(block_size)-log(h[i])) ). For example, the data analyzer 210 may determine the contribution of the histogram column according to a table.

The data analyzer 210 accumulates contributions of all of the histogram columns (e.g., sums the contributions of all of the histogram columns) and then normalizes the final result. For example, the data analyzer 210 may perform a shift right operation on the accumulated contributions of the histogram columns.

For each write command, the data analyzer 210 outputs, to the pre-processor 230, an average entropy of the sampled blocks (e.g., 1, 2, or 3). For example, in a case of a write command of one logic block, the entropy of the one logic block is also the average entropy. In a case of a write command with 2 or 3 logic blocks, the data analyzer may sum the entropy values calculated per block and divide the sum by 2 or 3, accordingly, to get the average.

The pre-processor 230 receives parsed read/write commands from the CMD fetcher 210 and data features (e.g., the average entropies) from the data analyzer 220 and outputs a set of features based on the parsed read/write commands and the data features. For example, the pre-processor 230 may output a set of features per slice of read/write data. A slice, as used herein, may be 1 million logic blocks. For each new slice, the pre-processor may reset counter of the feature values.

A sum of the number of logic blocks (NLBs) of a read/write command may exceed 1 million, as the size of a last command is not known in advance. To account for NLBs exceeding 1 million, the pre-processor may clip all values in 0xFFFFF and discard residual values.

FIG. 4 is a functional diagram of a pre-processor according to example embodiments.

Referring to FIG. 4, the pre-processor 230 includes a write after read (WaR) detector 233 and/or a feature extractor 234.

The WaR detector 233 receives read/write command fields (e.g., parsed read/write commands from the CMD fetcher 210), maintains a database of last read segments, and detects events of write-after-read to the same logic block (LB) or LBs. The WaR detector 233 outputs read events, WaR events, access size, and/or WaR time lapse (e.g., a time between related read and write operations) to the feature extractor 234.

To detect and analyze WaR events, the WaR detector 233 may maintain a database of latest read LBs in the memory. The database will be described in detail later.

The WaR detector 233 may search the database for a read segment to find a WaR match or to locate a new read. The WaR detector 233 may compare a start address and an end address of each segment to determine a WaR. Many scenarios of partial/full overlap between segments is possible. For WaR detection, the WaR detector 233 may count only overlapping LBs.

FIG. 5 is an example of a WaR detection according to example embodiments.

Referring to FIG. 5, Read A and Read B segments and a write command are described by descriptors. Read A starts at offset 50 and has a size of 9 LBs. Read B starts at offset 62 and has a size of 8 LBs. The write command starts at offset 56 and is for 10 LBs.

As shown in FIG. 5, there are two ranges of WaR outlined by dotted lines. The first is 3 LBs from offset 56 to offset 59 and the second is 4 LBs from offset 62 to offset 66.

The feature extractor 234 receives the events (e.g., read events, WaR events, WaR time lapse, and/or access size) from the WaR detector 233 and calculates features as shown in Table 1.

Table 1

| feature | bits | description | HW details |
|---|---|---|---|
| frac_r | 20 | accumulative length of read operations in the slice. | Implemented as counter of read/write NLBs. (Fixed point) |
| frac_war | 20 | accumulative length of WaR operations in the slice. | Clip in 20'hFFFFF. |
| hist_r[10] | 20 | Histogram of the sizes of read blocks in the slice. | 10 bins. each bin, i, counts the number of read/WaR operations of up to i (including i) NLBs, and more than previous bin limit. |
| hist_war[10] | 20 | Histogram of the sizes of WaR blocks in each slice. | i = {2, 4, 8, 16, 32, 64, 128, 256, 512, 1024} example: detected read of 50 blocks → increase the counter of 64. The first counter requires 20 bits, the 2nd 19 bits, ... and the last counter is up to 10 bits. |
| var | 20 | The variance of the WaR time lapses. | During the slice, will sum the following:<br><br>The number of elements - n time-lapses - for the average calculation<br>The squares of time lapses.<br>When the slice ends, calculate the variance as following:<br>divide the sum of squares by n calculate the average (divide the sum of time lapses by n)<br>calculate square of the average.<br>subtract the square of average from (1). |
| slice_time | 25 | time resolution of 2us, so that the maximal value is 32sec | Time difference from the first command in the slice to the last one. time resolution of 2us, so that the maximal value is 32sec. For slices that exceed 32 seconds, clip the value to 0x1FF_FFFF. |

The feature extractor 234 outputs the calculated features to the ML unit 240. The ML unit 240 calculates decisions as to whether a slice is suspected as ransomware according to a pre-trained ML model.

The ML model may be, for example, a random forest (RF) algorithm. For example, a RF state machine (SM). However, example embodiments are not limited thereto and any known machine learning algorithm may be used. The RF SM algorithm will be mainly described herein.

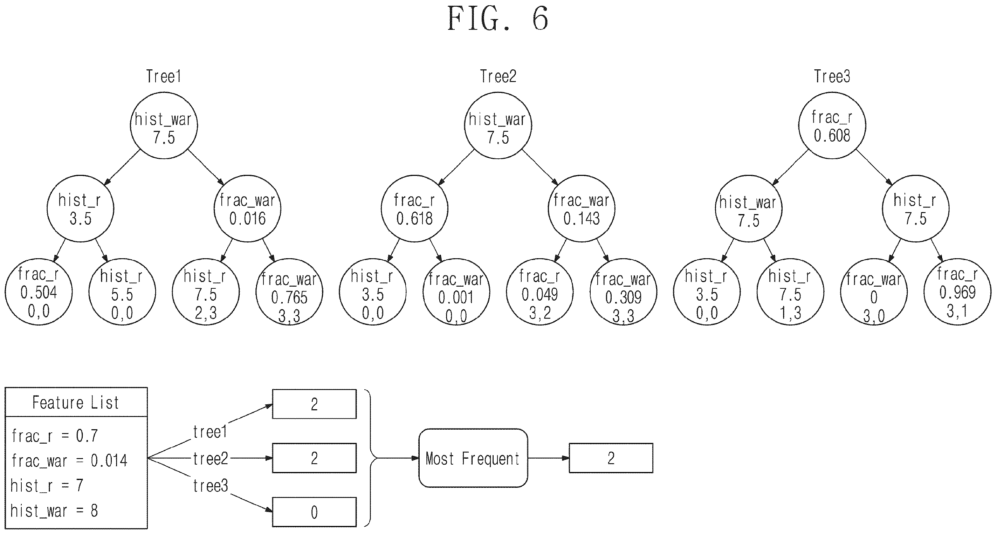

FIG. 6 is a representation of a random forest according to example embodiments.

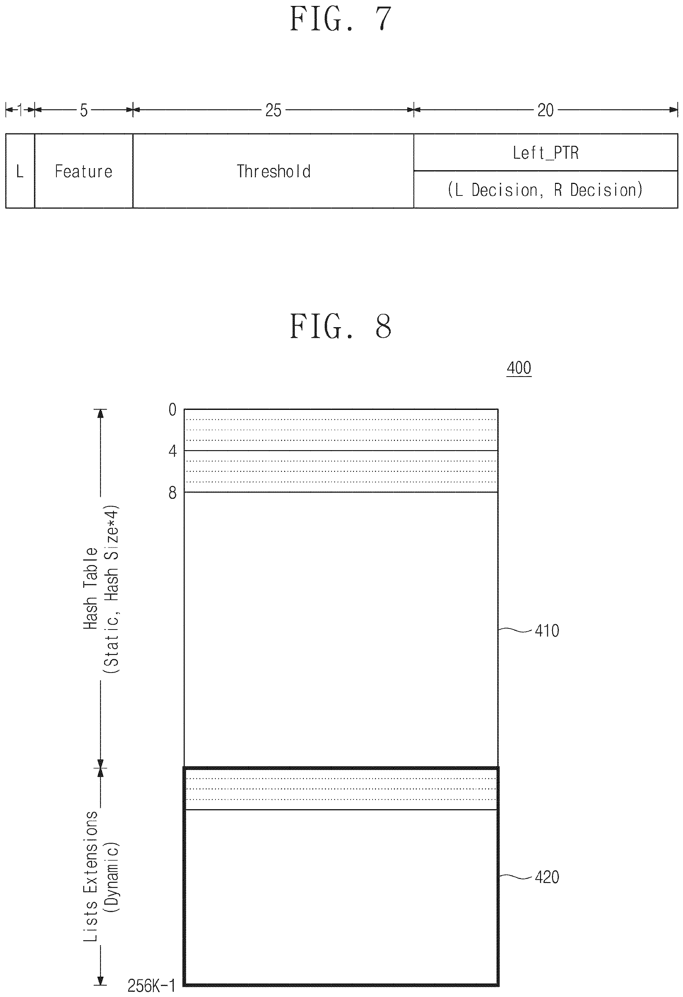

The RF binary trees may be stored in the memory. For example, the tree roots may be stored in the memory at predefined, or alternately given, addresses (e.g., 0-99). Each node of the trees includes the following fields: L indicates a leaf node; Feature ID to compare (e.g., 1 of 25 features); a threshold value; a pointer to the child node (the pointer may point to, for example, the left child node with the right child node having an address one greater than the left child node); and a decision in case a node is a leaf node. FIG. 7 is an example structure of a node according to example embodiments.

Referring to FIG. 6, a RF SM executes tree by tree and collects the decision of each tree. A final decision of the RF SM is based on a majority vote of all trees. The example shown in FIG. 6 includes 3 trees. However, example embodiments are not limited thereto and a RF SM may include more or fewer trees. For example, a number of the trees may be defined according to the model.

The RF SM traverses the trees beginning from the root of each (or one or more) tree. A tree decision (e.g., a vote) is made in the leaves of the tree. For example, the RF SM starts from fetching the first node of each tree (e.g., tree root node). According to the feature field, the RF SM selects the relevant attribute, and compares it to threshold. If the measure feature is less than the threshold, the algorithm proceeds on a left path of the node. Otherwise (if the feature is greater than or equal to the threshold) the algorithm proceeds on a right path of the node. If the node is a leaf node, then the RF SM will return the decision (e.g., vote) for the tree according to a result of the comparison at the leaf node.

A result of the RF SM is based on a majority vote of the trees. For example, the result may be a binary result indicating whether the slice is suspected of indicating ransomware e.g., 1 indicates the slice is suspected of indicating ransomware, 0 indicates the slice is not suspected of indicating ransomware). The results from the RF SM are output to the RW estimator 250.

The RW estimator accumulates a number (e.g., 10) of the last slice decisions from the SM RF. If more than a threshold (e.g., 8 of the 10 decisions) indicate suspected ransomware, then the RW estimator 250 outputs a RW alert.

A read segments database 400 according to example embodiment is discussed below.

The read segments database 400 contains segments of consecutive read LBs. The read segment database 400 may support variable lengths of segments (e.g., between 1 and 4096). The read segments database may be relatively easy to search, add, and/or remove elements of a large range (e.g., low complexity).

FIG. 8 is an example of a read segments database according to example embodiments.

Referring to FIG. 8, the read segments database 400 includes a hash table 410 and an extensions list 420. The hash table 410 may be static, while the extensions list 420 may be dynamically maintained (e.g., by the WaR detector 233).

Logic blocks read indications may be stored in the read segments database 400 according to chunks. A chunk as used herein refers to C LBs. For example, C may be equal to 4096.

Each read/write access has an address (SLBA) of 40 bits and a variable size (NLB). For example, the 40 bit address SLBA may be the address of the LB in the memory device (e.g., NVM 1320a). If NLB is greater than 1, then the address SLBA refers to the first block.

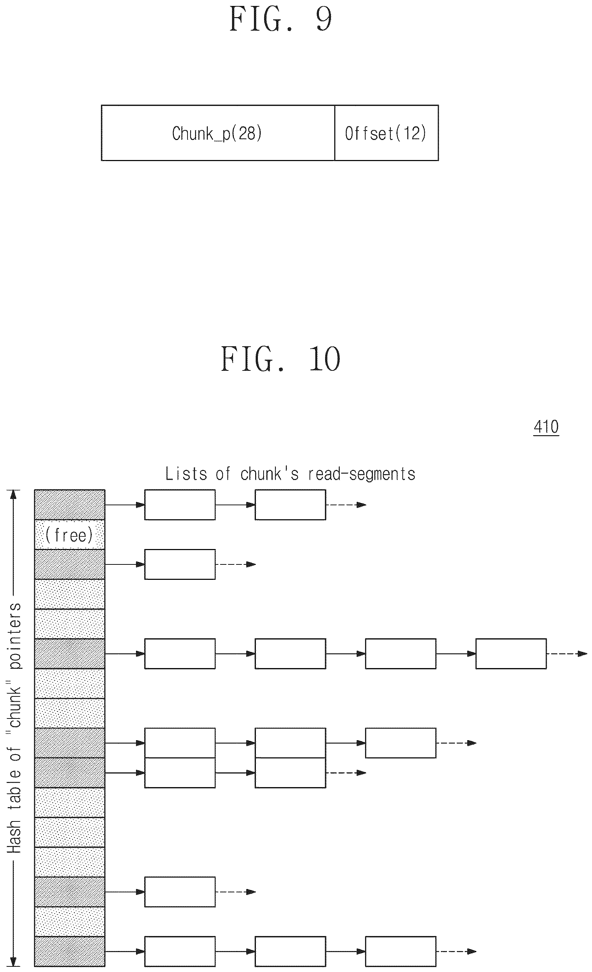

FIG. 9 is an example of an address of a read/write access according to example embodiments.

Referring to FIG. 9, the address SLBA includes a chunk pointer Chunk_p and an offset. The chunk pointer Chunk_p may be 28 bits, and the offset may be 12 bits. The WaR detector 233 may map the chunks to the hash table 410. For example, the WaR detector 233 may map the chunks to the hash table 410 using a cuckoo hash algorithm. However, example embodiments are not limited thereto and any hash algorithm may be used. A chunk may contain multiple segments (e.g., segment descriptors). The WaR detector 233 may maintain the segments of a chunk via a sorted linked list.

FIG. 10 is an example of a hash table according to example embodiments.

Referring to FIG. 10, each hash entry in the hash table 410 contains a chunk header followed by sorted list of segments according to the offset.

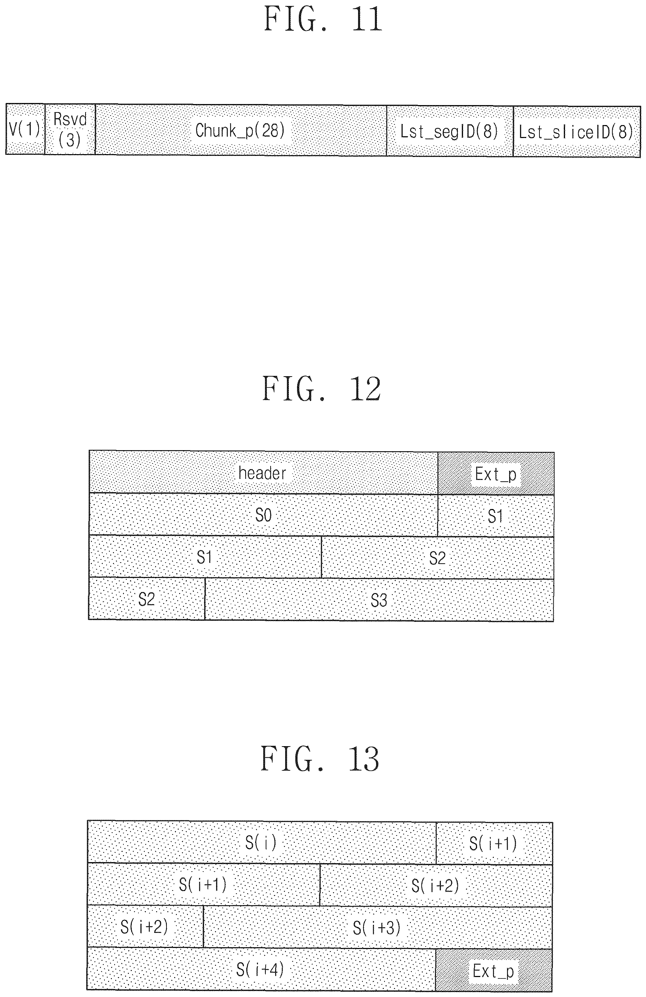

FIG. 11 is an example of a chunk header according to example embodiments.

Referring to FIG. 11, each chunk header includes: a qualifier v (valid bit); the chunk pointer Chunk_p; a chunk last segment ID Lst_segID indicating a segments count of the last segment added to the list; and a chunk last slice ID Lst_sliceID indicating a segment count of the last segment added to the list.

FIG. 12 is an example of a segment descriptor according to example embodiments.

Referring to FIG. 12, each segment descriptor includes: an offset indicating 12 bits of offset (relative to the chunk base) in the chunk; a size (NLB) indicating a number of logic blocks as received in the read command (for example, 0x008 may represent an access of 8 logic blocks); and a timestamp indicating a timestamp of the command. The offset may be the 12 least significant bits (LSB) of the segment address. The timestamp may be, for example, in a 2us resolution.

Returning to FIGS. 8 and 10, the hash table 410 includes static allocations of 256 bits, which may each include a hash entry, a number of segments, and an extension pointer Ext_p to a list extension (if a list extension exists). For example, the hash table 410 may include 32 thousand static allocations. For simplicity, example embodiments are described with a number of segments equal to 4. However, this is only an example and the number of segments may be greater than or less than 4. FIG. 13 is an example of a static allocation according to example embodiments.

The WaR detector 233 may access the static allocations using hash functions. For example, three hash functions may be used to access a static allocation (e.g., according to a cuckoo hashing). However, example embodiments are not limited thereto and more or fewer hash functions may be used.

Returning to FIG. 8, the extensions list 420 includes dynamic allocations of 256 bits, which may each include 5 segments and a pointer Ext_p to a further list extension (if a further list extension exists). The WaR detector may allocate the dynamic allocations if a chunk list of read segments has more than 4 segments.

The WaR detector 233 may perform generally, a search, an insert, and/or a remove function with respect to the read segments database 400.

To search the read segments database 400 for a segment (or a segment overlapping) the WaR detector 233 calculates the hash functions based on the chunk pointer of the segment being searched for. For example, the WaR detector 233 may calculate 3 hash functions based on the chunk pointer (e.g. according to a cuckoo hashing algorithm). However, example embodiments are not limited thereto and the WaR detector may calculate more or less than 3 hash functions.

If a match is found based on the calculated hash functions, the WaR detector 233 scans the linked list (e.g., segment by segment) associated with the chunk pointer to find a match (e.g., a full match or a partial match) to the offset and NLB of the segment being searched for.

Each segment in the database 400 may represent a read command, with a start address (SLBA 28+12 bits) and number of blocks (NLB) read starting from this SLBA. If the SLBA of the write segment is higher than an SLBA of an existing segment, and lower than SLBA+NLB of the existing segment, or vice versa, than WaR detector 233 may determine that the segments overlap.

The WaR detector 233 inserts a segment to the read segments database 400 according to its chunk and offset. For example, if a search of the segment to be inserted is successful, the WaR detector 233 may insert the new segment in the linked list of segments corresponding to the chunk pointer in the hash table 410 such that the linked list remains sorted. For example, the segment may be added to the linked list of segments according to known methods.

If a chunk corresponding with the segment to be inserted is not found in the hash table 410, then the WaR detector 233 may generate a new chunk and enter it in a free entry of the hash table 410, if there is a free entry. If there is no free entry in the hash table 410, the WaR 410 may remove an old chunk entry from the hash table 410. For example, an old chunk entry in the hash table 410 may be regarded as a free entry.

Each chunk entry includes 2 counter based variables: a chunk last segment ID Lst segID; and a chunk last slice ID Lst_sliceID, as described above with reference to FIG. 11. If one of the counter based variables is below an old chunk threshold (e.g., a previously defined or alternately given threshold), the WaR detector 233 may determine the chunk to be old. For example, the old chunk threshold may be defined on seg ID (which is the most significant bits (MSB) of segment counter Lst_segID) such that at least 20% of the chunks in the hash table 410 are be considered old. Accordingly, the hash table 410 may be maintained to be below 80% utilization in order to more easily insert new segments.

To replace a chunk determined to be old, the WaR detector 233 may overwrite the entry (e.g., the static allocation) of the old chunk with a static allocation of the new chunk to be added in the hash table 410. If the old chunk has associated segment extensions, then the WaR detector 233 releases the associated segments.

To release a segment, the WaR detector 233 invalidates the segment in the static allocation. For example the WaR detector 233 may set invalid fields (e.g., offset = 0xFFF, size=0x000, etc.).

If the old chunk additionally has associated dynamic segments, the WaR detector 233 also releases the dynamic allocations in the extensions list 420.

The WaR detector 233 may manage the dynamic allocations in the extensions list 420 in a last in first out (LIFO) structure. The LIFO structure may be implemented as a linked list in the memory.

Initially, the WaR detector 233 may allocate memory incrementally, until a last address of the extension list 420 is reached. A logic of the extension list 420 will hold a LIFO head (e.g., an address of the LIFO head) and a count of free cells.

For example, to determine the count of free cells, the WaR detector 233 starts with a defined number of free extension cells. As the WaR detector 233 allocates extensions, the number of free extension cells decreases. When the WaR 233 invalidates a list with extensions, the extension cells that are released may not be in order. To account for the released extension cells not being in order, the WaR 233 manages the extension cells in the LIFO structure to preserve memory.

To release a dynamic allocation in the extension list 420, the WaR detector 233 sets the LIFO head to the address of the released allocation and sets the dynamic allocation to point to the previous LIFO head.

To allocate a new dynamic allocation segment, the WaR detector 233 reads the structure pointed by the LIFO head and updates the LIFO head with the read pointer.

Therefore, according to example embodiments, the read segments database 400 may allow for faster and more accurate determination of a ransomware attack, while requiring less memory.

One or more of the elements disclosed above may include or be implemented in one or more processing circuitries such as hardware including logic circuits; a hardware/software combination such as a processor executing software; or a combination thereof. For example, the processing circuitries more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

While the inventive concepts have been described with reference to some example embodiments thereof, it will be apparent to those of ordinary skill in the art that various changes and modifications may be made thereto without departing from the spirit and scope of the inventive concepts as set forth in the following claims.

**Claims**

**1.** A nonvolatile memory device comprising:

a memory storing a read segments database; and
processing circuitry configured to,

parse read and write commands received from a host,
detect write after read operations based on the read and write commands and the read segments database,
determine features of the write after read operations,
determine a probability of a ransomware attack based on the features, and output a warning in response to
determining a likely ransomware attack.

2. The nonvolatile memory device of claim 1, wherein the read segments database includes a static hash table portion and a dynamic extensions list portion.

3. The nonvolatile memory device of claim 2, wherein the hash table portion includes a plurality of chunk entries, and wherein one or more of the chunk entries includes a pointer to a linked list of segment allocations.

4. The nonvolatile memory device of claim 3, wherein the linked list of segment allocations includes a maximum of four segment allocations in the hash table portion corresponding with each chunk entry of the plurality of chunk entries.

5. The nonvolatile memory device of claim 4, wherein a fourth segment allocation of a respective chunk entry of the plurality of chunk entries includes a pointer to a dynamic allocation included in the dynamic extensions list portion.

6. The nonvolatile memory device of claim 1, wherein the processing circuitry is further configured to manage the read segments database.

7. The nonvolatile memory device of claim 1, wherein the processing circuitry is further configured to classify the features using a random forest state machine.

8. The nonvolatile memory device of claim 7, wherein the processing circuitry is further configured to determine the probability of the ransomware attack based on a majority vote of trees included in the random forest state machine.

9. The nonvolatile memory device of claim 2, wherein the processing circuitry is further configured to manage the static hash table using cuckoo hashing.

10. The nonvolatile memory device of claim 2, wherein the processing circuitry is further configured to manage the static hash table to be below 80% utilization.

11. A method for determining a ransomware attack, the method comprising:

parsing read and write commands received from a host;
detecting write after read operations based on the read and write commands and a read segments database;
determining features of the write after read operations;
determining a probability of a ransomware attack based on the features; and
outputting a warning in response to determining a likely ransomware attack.

12. The method of claim 11, wherein the read segments database includes a static hash table portion and a dynamic extension list portion.

13. The method of claim 12, wherein the hash table portion includes a plurality of chunk entries, and wherein one or more of the chunk entries includes a pointer to a linked list of segment allocations.

14. The method of claim 13, wherein the linked list of segment allocations includes a number of segment allocations in the hash table portion corresponding with each chunk entry of the plurality of chunk entries.

15. The method of claim 14, wherein a last segment allocation of the number of segment allocations of a respective chunk entry of the plurality of chunk entries includes a pointer to a dynamic allocation included in the dynamic extension list portion.

**Amended claims in accordance with Rule 137(2) EPC.**

1. A nonvolatile memory device (1300a, 1300b) comprising:

   a memory (1330a, 1330b) storing a database of last read segments (400); and
   processing circuitry configured to,

   parse read and write commands received from a host (1100),
   detect write after read operations based on the read and write commands and the database of last read segments (400),
   determine features of the write after read operations,
   determine a probability of a ransomware attack based on the features, and
   output a warning in response to determining a likely ransomware attack,

   wherein the database of last read segments (400) includes a static hash table portion and a dynamic extensions list portion, and

   wherein the static hash table portion is connected with the dynamic extensions list portion via a pointer.

2. The nonvolatile memory device (1300a, 1300b) of claim 1, wherein the hash table portion includes a plurality of chunk entries, and
   wherein one or more of the chunk entries includes a pointer to a linked list of segment allocations.

3. The nonvolatile memory device (1300a, 1300b) of claim 2, wherein the linked list of segment allocations includes a maximum of four segment allocations in the hash table portion corresponding with each chunk entry of the plurality of chunk entries.

4. The nonvolatile memory device (1300a, 1300b) of claim 3, wherein a fourth segment allocation of a respective chunk entry of the plurality of chunk entries includes a pointer to a dynamic allocation included in the dynamic extensions list portion.

5. The nonvolatile memory device (1300a, 1300b) of claim 1, wherein the processing circuitry is further configured to manage the database of last read segments (400).

6. The nonvolatile memory device (1300a, 1300b) of claim 1, wherein the processing circuitry is further configured to classify the features using a random forest state machine.

7. The nonvolatile memory device (1300a, 1300b) of claim 6, wherein the processing circuitry is further configured to determine the probability of the ransomware attack based on a majority vote of trees included in the random forest state machine.

8. The nonvolatile memory device (1300a, 1300b) of claim 1, wherein the processing circuitry is further configured to manage the static hash table using cuckoo hashing.

9. The nonvolatile memory device (1300a, 1300b) of claim 1, wherein the processing circuitry is further configured to manage the static hash table to be below 80% utilization by comparing counter based variables of the plurality of chunk entries with an old chunk threshold.

10. A method for determining a ransomware attack, the method comprising:

    parsing read and write commands received from a host (1100);
    detecting write after read operations based on the read and write commands and a database of last read segments (400);
    determining features of the write after read operations;
    determining a probability of a ransomware attack based on the features; and
    outputting a warning in response to determining a likely ransomware attack,
    wherein the database of last read segments (400) includes a static hash table portion and a dynamic extension list portion, and

wherein the static hash table portion is connected with the dynamic extension list portion via a pointer.

11. The method of claim 10, wherein the hash table portion includes a plurality of chunk entries, and wherein one or more of the chunk entries includes a pointer to a linked list of segment allocations.

12. The method of claim 11, wherein the linked list of segment allocations includes a number of segment allocations in the hash table portion corresponding with each chunk entry of the plurality of chunk entries.

13. The method of claim 12, wherein a last segment allocation of the number of segment allocations of a respective chunk entry of the plurality of chunk entries includes a pointer to a dynamic allocation included in the dynamic extension list portion.

# FIG. 1

## FIG. 2

# FIG. 3

| Op(8) | SLBA(40) | NLB(16) |
|-------|----------|---------|
| Timestamp | | |

←————————————————— 64 bits —————————————————→

# FIG. 4

230

Pre-Processor

233        234

v →
r/w →
timestamp →
addr →
size →

WaR Detect

Read_evt →
WAR_evt →
WAR_timelapse →
size →
timestamp →

Feature Extract

→ valid →
→ var →
→ Frac_r →
→ Frac_war →
→ Hist_war[10] →
→ Hist_r[10] →
→ Slice_time →

# FIG. 5

Read A
Read B
Write

50      56   59    62    66    70

# FIG. 6

EP 4 718 300 A1

# FIG. 7

| L | Feature | Threshold | Left_PTR |
|---|---|---|---|
| 1 | 5 | 25 | 20 |
| | | | (L Decision, R Decision) |

# FIG. 8

400

# FIG. 9

| Chunk_p(28) | Offset(12) |
|---|---|

# FIG. 10

410

Lists of chunk's read-segments

Hash table of "chunk" pointers

(free)

# FIG. 11

| V(1) | Rsvd (3) | Chunk_p(28) | Lst_segID(8) | Lst_sliceID(8) |
|------|----------|-------------|--------------|----------------|

# FIG. 12

| header | | Ext_p |
|--------|--|-------|
| S0 | | S1 |
| S1 | | S2 |
| S2 | S3 | |

# FIG. 13

| S(i) | | S(i+1) |
|------|--|--------|
| S(i+1) | | S(i+2) |
| S(i+2) | S(i+3) | |
| S(i+4) | | Ext_p |

| | Europäisches Patentamt European Patent Office Office européen des brevets | **EUROPEAN SEARCH REPORT** | **Application Number** EP 24 21 2994 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Wang Zhongyu ET AL: "Ransom Access Memories: Achieving Practical Ransomware Protection in Cloud with DeftPunk", , 12 July 2024 (2024-07-12), pages 1-17, XP093259134, Retrieved from the Internet: URL:https://www.usenix.org/system/files/osdi24-wang-zhongyu.pdf [retrieved on 2025-03-13] * abstract * * sections 1, 4-5 * * figure 1 * ----- | 1-15 | INV. G06F21/55 G06F21/56 G06F12/02 G06F16/21 G06F18/243 H04L9/40 ADD. G06F16/901 |
| X<br>A | KR 101 970 993 B1 (THEVAULTERS INC [KR]) 23 April 2019 (2019-04-23) * paragraphs [0018], [0065], [0073], [0075], [0087] * ----- | 1-3,6-8, 11-13<br>4,5,9, 10,14,15 | |
| A | US 2019/102262 A1 (SUKHOMLINOV VADIM [US] ET AL) 4 April 2019 (2019-04-04) * paragraphs [0080], [0083], [0084], [0091]; figure 4 * ----- | 1-15 | |
| A | US 2019/130097 A1 (BERLER DANNY [IL] ET AL) 2 May 2019 (2019-05-02) * paragraphs [0023], [0026], [0032]; figure 3 * ----- | 1-15 | |

| TECHNICAL FIELDS SEARCHED (IPC) |
|---|
| G06F G06V H04L |

The present search report has been drawn up for all claims

| Place of search | Date of completion of the search | Examiner |
|---|---|---|
| Munich | 14 March 2025 | Kleppmann, Philipp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 2994

This annex lists the patent family members relating to the patent documents cited in  the above-mentioned European search report.
The members are as contained in the European Patent Office EDP file on
The European Patent Office is in no way liable for these particulars which are merely given for the purpose of information.

14-03-2025

| Patent document cited in search report | | Publication date | Patent family member(s) | | Publication date |
|---|---|---|---|---|---|
| KR 101970993 | B1 | 23-04-2019 | KR | 101970993 B1 | 23-04-2019 |
|  |  |  | WO | 2019107609 A1 | 06-06-2019 |
| US 2019102262 | A1 | 04-04-2019 | CN | 109634775 A | 16-04-2019 |
|  |  |  | DE | 102018214013 A1 | 09-05-2019 |
|  |  |  | US | 2019102262 A1 | 04-04-2019 |
| US 2019130097 | A1 | 02-05-2019 | CN | 109711158 A | 03-05-2019 |
|  |  |  | DE | 102018123697 A1 | 02-05-2019 |
|  |  |  | US | 2019130097 A1 | 02-05-2019 |

EPO FORM P0459

For more details about this annex : see Official Journal of the European Patent Office, No. 12/82